# EUROPEAN PATENT SPECIFICATION

(11) **EP 3 758 384 B1**
(45) Date of publication and mention of the grant of the patent: **27.09.2023**
(21) Application number: 19785285.8
(22) Date of filing: 09.04.2019
(51) Int. Cl.: H04L 65/401, H04L 65/1059, H04L 65/1089, H04L 67/63, H04N 21/2381, H04N 21/2743, H04N 21/61, H04N 21/63, H04N 7/14

(54) **METHOD FOR CONTROLLING VIDEO SHARING THROUGH RICH COMMUNICATION SUITE SERVICE AND ELECTRONIC DEVICE THEREFOR**
VERFAHREN ZUR STEUERUNG DER GEMEINSAMEN NUTZUNG VON VIDEO DURCH EINEN REICHHALTIGEN KOMMUNIKATIONSDIENST UND ELEKTRONISCHE VORRICHTUNG DAFÜR
PROCÉDÉ DE COMMANDE DE PARTAGE DE VIDÉO PAR L'INTERMÉDIAIRE D'UN SERVICE DE SUITE DE COMMUNICATION RICHE ET DISPOSITIF ÉLECTRONIQUE ASSOCIÉ

(30) Priority: 09.04.2018 KR 20180040900
(43) Date of publication of application: 30.12.2020
(73) Proprietor: Samsung Electronics Co., Ltd., Gyeonggi-do 16677 (KR)
(72) Inventor: LEE, Shinduck, Suwon-si Gyeonggi-do 16677 (KR); LEE, Jongphil, Suwon-si Gyeonggi-do 16677 (KR); LEE, Changhun, Suwon-si Gyeonggi-do 16677 (KR); LEE, Hyunchul, Suwon-si Gyeonggi-do 16677 (KR)
(74) Representative: Gulde & Partner
(86) International application number: PCT/KR2019/004196
(87) International publication number: WO 2019/199016

(56) References cited:
- WO-A1-2009/114482
- WO-A1-2016/138550
- KR-A- 20090 004 999
- US-A1- 2008 039 093
- US-A1- 2012 030 682
- US-A1- 2013 063 540
- US-A1- 2015 201 454
- US-A1- 2015 237 544
- US-A1- 2017 070 456
- US-A1- 2017 070 543
- US-A1- 2017 070 543
- US-A1- 2017 310 729
- US-B1- 6 694 429
- V2 Gsma: "GSM Association Non-confidential Official Document RCC.07 -Rich Communication Suite 5.1 Advanced Communications Services and Client Specification Rich Communication Suite 5.1 Advanced Communications Services and Client Specification Security Classification: Non-confidential", , 3 March 2013 (2013-03-03), page 0, XP055739060, Retrieved from the Internet: URL:https://www.gsma.com/futurenetworks/wp -content/uploads/2013/05/RCS-5.1-V2.0-UNI. pdf [retrieved on 2020-10-12]
- "3rd Generation Partnership Project; Technical Specification Group Services and System Aspects; IP Multimedia Subsystem (IMS) media plane security (Release 14)", 3GPP STANDARD ; TECHNICAL SPECIFICATION ; 3GPP TS 33.328, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. V14.0.0, 27 March 2017 (2017-03-27), pages 1-71, XP051297658, [retrieved on 2017-03-27]
- CAMPBELL STANDARD VELOCITY R HOUSLEY VIGIL SECURITY B: "Securing Session Initiation Protocol (SIP) based Messaging with S/MIME; draft-campbell-sip-messaging-smime-02.txt" , SECURING SESSION INITIATION PROTOCOL (SIP) BASED MESSAGING WITH S/MIME; DRAFT-CAMPBELL-SIP-MESSAGING-SMIME-02.TXT; INTERNET-DRAFT: NETWORK WORKING GROUP, INTERNET ENGINEERING TASK FORCE, IETF; STANDARDWORKINGDRAFT, INTERNET SOCIETY (ISOC) 4, RUE DES, no. 2, 27 December 2017 (2017-12-27), pages 1-36, XP015124930, [retrieved on 2017-12-27]

## Description

### [Technical Field]

Various embodiments of the disclosure relate to a method for controlling video sharing through a rich communication suite service and an electronic device including the method.

### [Background Art]

In recent mobile communication, client devices (i.e., user equipment (UE), such as a mobile device or a stationary device) that enable access to a long-term evolution (LTE) network and use of data services are increasingly being introduced due to growth of LTE networks.

Further, with the development of mobile communication, users of client devices use the devices for various purposes in addition to a simple voice call. Accordingly, the Global System for Mobile Communications Association (GSMA) proposes a rich communication suite (hereinafter, "RCS") that provides various communication functions to users of UE through a communication network.

An RCS service generally allows a client device to update pieces of status information about counterparts stored in an address book in real time and thus to enable "rich communication", for example, voice over LTE (VoLTE), a video call, instant messaging (IM), file or image sharing, and the like, based on the pieces of status information updated in real time.

Specifically, an RCS service RCS may provide a call function (enriched call) of sharing a multimedia file, such as a video or a picture, during a call, an address book function (enhanced phonebook) of obtaining information about a communication partner registered in an address book in real time, a message function (enriched messaging) of sharing a file during a chat, and the like. This RCS service first started in Europe and is currently being widely used all over the world including in South Korea and the USA.

The following publications are considered a technological background for the present invention: US 2017/0070456 A1 concerning a streaming media content to a user equipment in an internet protocol multimedia subsystem; WO 2009/114482 A1 concerning a method and apparatus for video services; US 2017/0310729 A1 disclosing maximum sustainable encoding bit rates for video downloads; US 6,694,429 B1 describing a method for establishing call state information without maintaining state information at gate controllers; US 2008/0039093 A1 concerning cell reselection apparatus and method of wireless communication system; US 2012/0030682 A1 referring to a dynamic priority assessment of multimedia for allocation of recording and delivery resources; and a publication of GSM Association related to a "Rich Communication Suite 5.1, Advanced Communications Services and Client Specification", Version 2.0 of 03 May 2013.

### [Disclosure of Invention]

### [Technical Problem]

When there is an insignificant variance in a screen image while using a video call function using an RCS service, data is transmitted in reduced size to a network according to video sharing technology of the RCS service. In this case, when a small amount of data is transmitted, the network may request a resource change, and thus a call drop may occur.

According to an aspect, a method for controlling video sharing through a rich communication suite service and an electronic device including the method according to various embodiments of the disclosure may prevent a call drop while using a video call function using an RCS service.

### [Solution to Problem]

To achieve the foregoing aspect or other aspects, a method according to various embodiments may include: receiving a resource change request from a network; determining whether there is a video sharing operation through the RCS service upon receiving the request; determining whether a cell connected with the electronic device is a cell supporting a high speed packet access, HSPA, communication method when there is the video sharing operation; determining whether a transmission amount of data is equal to or greater than a predetermined transmission amount when it is determined that the cell connected with the electronic device is the cell supporting the HSPA communication method; and transmitting the request to an application supporting the RCS service when the transmission amount of data is equal to or greater than the predetermined transmission amount..

To achieve the foregoing aspect or other aspects, an electronic device for controlling video sharing through a rich communication suite, RCS, service may comprise: a display; a communication module; a processor; and a memory configured to be electrically connected to the processor, wherein the memory comprises instructions that cause the processor to: receive a resource change request from a network; determine whether there is a video sharing operation through the RCS service upon receiving the request; determine whether a cell connected with the electronic device is a cell supporting a high speed packet access, HSPA, communication method when there is the video sharing operation; determine whether a transmission amount of data is equal to or greater than a predetermined transmission amount when it is determined that the cell connected with the electronic device is the cell supporting the HSPA communication method; and transmit the request to an application supporting the RCS service when the data transmission amount of data is equal to or greater than the predetermined transmission amount.

### [Advantageous Effects of Invention]

A method for controlling video sharing through a rich communication suite service and an electronic device including the method according to various embodiments of the disclosure may stably perform a video sharing operation without experiencing a call drop.

### [Brief Description of Drawings]

FIG. 1 is a block diagram illustrating an electronic device in a network environment according to various embodiments;
FIG. 2 schematically illustrates the configuration of an electronic device supporting an RCS service according to various embodiments of the disclosure;
FIG. 3 is a flowchart illustrating a method for configuring a video sharing service using RCS in an electronic device according to various embodiments of the disclosure;
FIG. 4 is a flowchart illustrating a method for controlling video sharing through an RCS service when information about whether a first communication method is supported is not received through system information in FIG. 3 according to various embodiments of the disclosure; and
FIG. 5 is another flowchart illustrating a method for controlling video sharing through an RCS service when the information about whether the first communication method is supported is not received through the system information in FIG. 3 according to various embodiments of the disclosure.

### [Mode for the Invention]

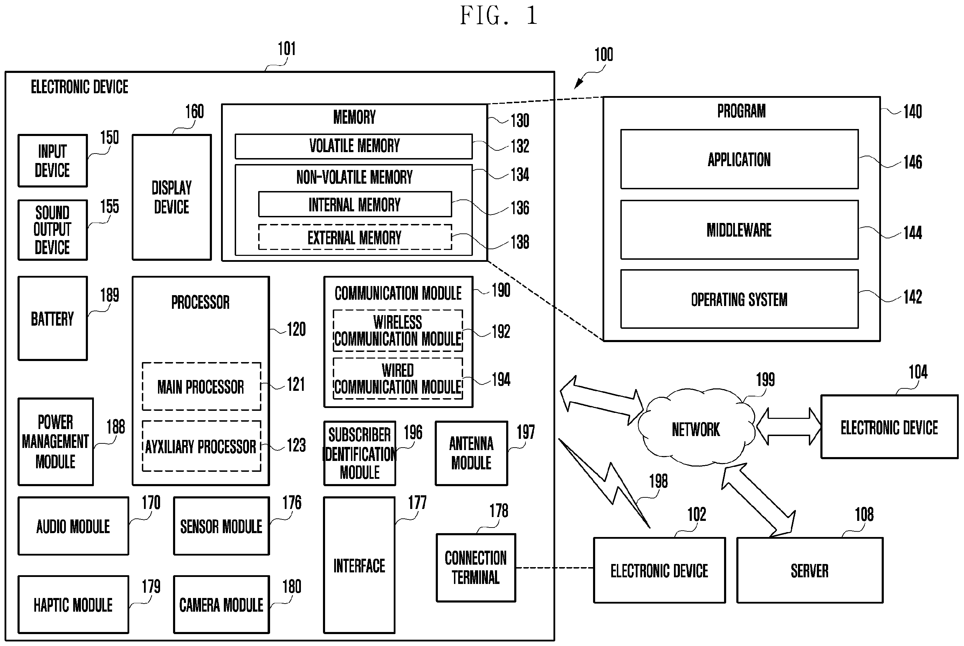

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network).According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module(SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, or a keyboard.

The sound output device 155 may output sound signals to the outside of the electronic device 101. The sound output device 155 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module 197 may include a plurality of antennas. In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna.

At least some of the components may be connected to each other and may exchange signals (e.g., commands or data) with each other through a communication method (e.g., bus, general-purpose input and output (GPIO), serial peripheral interface (SPI), or mobile industry processor interface (MIPI)) between peripheral devices.

According to an embodiment, a command or data may be transmitted or received between the electronic device 101 and the external electronic device 104 through the server 108 connected to the second network 199. Each of the electronic devices 102 and 104 may be a device of a type which is the same as or different from that of the electronic device 101. According to an embodiment, all or part of the operations executed by the electronic device 101 may be executed by one or more external devices of the external electronic devices 102, 104, or 108. For example, when the electronic device 101 needs to perform a function or service automatically or in response to a request from a user or another device, the electronic device 101 may request one or more external electronic devices to perform at least part of the function or the service rather than or in addition to autonomously executing the function or service. The one or more external electronic devices receiving the request may execute at least part of the requested function or service or an additional function or service associated with the request and may transmit the result of the execution to the electronic device 101. The electronic device 101 may provide the result as at least part of a response to the request as it is or by additionally processing the result. To this end, for example, cloud computing, distributed computing, or client-server computing technology may be used.

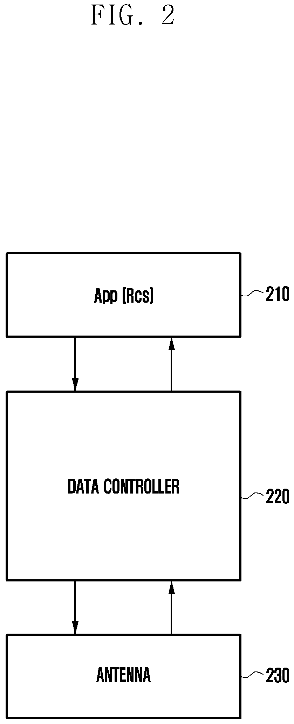

FIG. 2 schematically illustrates the configuration 200 of an electronic device 101 supporting an RCS service according to various embodiments of the disclosure.

Referring to FIG. 2, the electronic device 200 (e.g., the electronic device 101 of FIG. 1) may include at least one application 210 directly run by a user. The at least one application 210 may be an application supporting an RCS service. A data controller 220 may process data received through an antenna 230 to transmit the data to the at least application 210 and may process data transmitted from the at least one application 210 to transmit the data through the antenna 230. The antenna 230 may receive data from a network to transmit the data to the data controller 220 or may transmit data received from the data controller 220 to the network.

The data controller 220 may be included in the communication module 190 of FIG. 1 or may be the same as the processor 190 of FIG. 1.

The antenna 230 may be included in the antenna module 197 of FIG. 1 or may be the same as the antenna module of FIG. 1.

The at least one application 210 may be the same as the application 146 of FIG. 1.

Rich communication suite (hereinafter, "RCS") according to various embodiments of the disclosure provides services illustrated below.

RCS may provide various services, such as service discovery, video sharing, image sharing, instant-message chat, and file transfer.

RCS may allow the electronic device (e.g., the electronic device 101 of FIG. 1) to update pieces of status information about counterparts stored in an address book in real time and thus to enable "rich communication", for example, voice over LTE (VoLTE), a video call, instant messaging (IM), file or image sharing, and the like, based on the pieces of status information updated in real time.

RCS may provide a call function (enriched call) of sharing a multimedia file, such as a video or a picture, during a call, an address book function (enhanced phonebook) of obtaining information about a communication partner registered in an address book in real time, a message function (enriched messaging) of sharing a file during a chat, and the like.

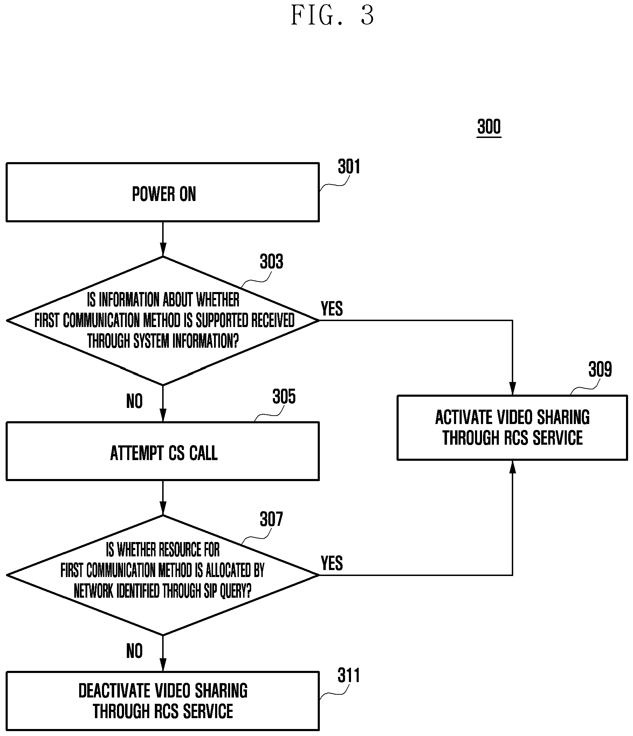

FIG. 3 is a flowchart illustrating a method for configuring a video sharing service using RCS in an electronic device 101 according to various embodiments of the disclosure.

In operation 301, the electronic device (e.g., the electronic device 101 of FIG. 1) may perform a power-on operation. The power-on operation may be an operation in which the electronic device 101 is supplied with power from a battery (e.g., the battery 189 of FIG. 1) or an external power source so that the electronic device 101 can operate.

In operation 303, the electronic device 101 is powered on through a data controller (e.g., the data controller 220 of FIG. 2) and may then determine whether information about whether a first communication method is supported is received through system information of a cell on which the electronic device 101 is currently camping.

For example, a network (e.g., a NodeB (NB) or an eNodeB (eNB)) may transmit information about a communication rule or a parameter to a mobile terminal (e.g., a UE) entering cell coverage managed by the network through a system information message.

The electronic device 101 may receive the information about whether the first communication method is supported through a message about the system information. The system information according to an embodiment of the disclosure may exist in system information block 5 (SIB5) according to a communication standard, and the first communication method may be a high speed packet access (HSPA) communication method.

That is, in operation 303, the electronic device 101 may receive information about whether HSPA is supported which is included in a SIB5 message from a communication network through the data controller (e.g., the data controller 220 of FIG. 2).

When receiving the information about whether the first communication method is supported through the system information, the electronic device 101 may activate an RCS video sharing (VSH) function of the electronic device 101 or a video sharing function thereof during a circuit-switched (CS) call through an RCS service through the data controller (e.g., the data controller 220 of FIG. 2) in operation 309. The activated video sharing function through the RCS service may be used at any time by user selection.

When not receiving the information about whether the first communication method is supported through the system information, the electronic device 101 may attempt a circuit-switched (CS) call through the data controller (e.g., the data controller 220 of FIG. 2) in operation 305.

In operation 307, the electronic device 101 may identify whether a resource for the first communication method is allocated by the network through a SIP query through the data controller (e.g., the data controller 220 of FIG. 2).

SIP denotes a session initiation protocol, which is a signaling protocol for generating, deleting, and modifying a communication session between electronic devices capable of communication, and the electronic device 101 may identify whether the network allocates the resource for the first communication method through the SIP query.

In operation 307, the electronic device 101 may determine whether the network allocates the resource for the first communication method through the data controller (e.g., the data controller 220 of FIG. 2).

When it is determined that the network allocates the resource for the first communication method, the electronic device 101 may proceed from operation 307 to operation 309 through the data controller (e.g., the data controller 220 of FIG. 2).

When it is determined that the network does not allocate the resource for the first communication method, the electronic device 101 may deactivate the RCS VSH function or RCS video sharing function of the electronic device 101 through the data controller (e.g., the data controller 220 of FIG. 2) in operation 311.

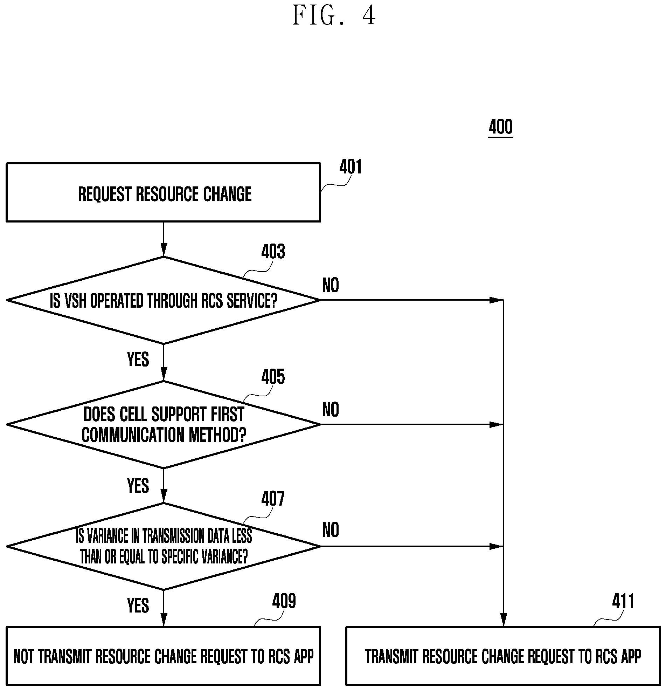

FIG. 4 is a flowchart 400 illustrating a method for controlling video sharing through an RCS service when the information about whether the first communication method is supported is not received through the system information in FIG. 3 according to various embodiments of the disclosure.

Referring to FIG. 3, even though the information about whether the first communication method is supported is not received through the system information, the network may identify whether the resource for the first communication method is allocated and may activate the video sharing function through the RCS service. The activated video sharing function through the RCS service may be used by user selection. Here, when the transmission amount of transmission data according to an image variance during use of the video sharing function is less than a specific transmission amount required by the first communication method, a network resource change request may be received from the network.

In operation 401, the electronic device (e.g., the electronic device 101 of FIG. 1) may receive a network resource change request from the network through the data controller (e.g., the data controller 220 of FIG. 2).

In operation 403, the electronic device 101 may determine whether the video sharing (VSH) function through the RCS service is operating through an application (e.g., the application 210 of FIG. 2) supporting the RCS service or the data controller (e.g., the data controller 220 of FIG. 2).

When it is determined that the video sharing function through the RCS service is not operating, the electronic device 101 may transmit the network resource change request to the application supporting the RCS service through the data controller (e.g., the data controller 220 of FIG. 2) in operation 411.

When it is determined that the video sharing function through the RCS service is operating, the electronic device 101 may identify whether a cell currently connected with the electronic device 101 is a cell supporting the first communication method through the data controller (e.g., the data controller 220 of FIG. 2) in operation 405. The first communication method may be a high speed packet access (HSPA) communication method.

When it is determined that the cell currently connected with the electronic device 101 is not a cell supporting the first communication method, the electronic device 101 may proceed from operation 405 to operation 411 through the data controller (e.g., the data controller 220 of FIG. 2).

When it is determined that the cell currently connected with the electronic device 101 is a cell supporting the first communication method, the electronic device 101 may identify whether a variance in transmission data transmitted from the application supporting the RCS service to the data controller (e.g., the data controller 220 of FIG. 2) is less than or equal to a specific variance determined by the data controller through the data controller (e.g., the data controller 220 of FIG. 2) in operation 407.

The specific variance in transmission data (TX data) determined by the data controller (e.g., the data controller 220 of FIG. 2) may be less than or equal to a variance transmission data determined by the network when a resource change request is made.

In various embodiments, when it is determined that the cell currently connected with the electronic device 101 is a cell supporting the first communication method, the electronic device 101 may determine whether a variance in transmission data of the electronic device 101 is less than or equal to the specific variance determined by the data controller by comparing 1) a variance in transmission data at a time when the network determines a resource change with 2) a variance in transmission data transmitted from an application area supporting the RCS service of the electronic device 101 to the data controller (e.g., the data controller 220 of FIG. 2) at a current time when the resource change request is received in operation 407.

When the variance in transmission data is less than or equal to the specific variance, the electronic device 101 may not transmit the network resource change request to the application supporting the RCS service through the data controller (e.g., the data controller 220 of FIG. 2) in operation 409.

When the variance in transmission data is equal to or greater than the specific variance, the electronic device 101 may transmit the network resource change request to the application supporting the RCS service through the data controller (e.g., the data controller 220 of FIG. 2) in operation 411.

When the electronic device 101 does not transmit the network resource change request to the application supporting the RCS service, a resource change does not occur while the video sharing function through the RCS service is operating, so that a call drop may not occur.

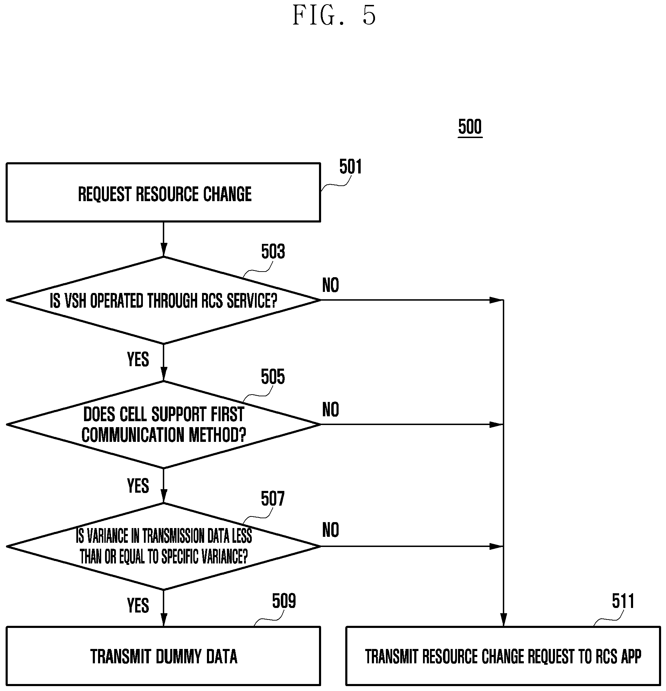

FIG. 5 is another flowchart 500 illustrating a method for controlling video sharing through an RCS service when the information about whether the first communication method is supported is not received through the system information in FIG. 3 according to various embodiments of the disclosure.

Referring to FIG. 3, even though the information about whether the first communication method is supported is not received through the system information, the network may identify whether the resource for the first communication method is allocated and may activate the video sharing function through the RCS service. The activated video sharing function through the RCS service may be used by user selection. Here, when the transmission amount of data according to an image variance during use of the video sharing function is less than a specific transmission amount required by the first communication method, a network resource change request may be received from the network.

In operation 501, the electronic device (e.g., the electronic device 101 of FIG. 1) may receive a network resource change request from the network through the data controller (e.g., the data controller 220 of FIG. 2).

In operation 503, the electronic device 101 may determine whether the video sharing (VSH) function through the RCS service is operating through an application (e.g., the application 210 of FIG. 2) supporting the RCS service or the data controller (e.g., the data controller 220 of FIG. 2).

When it is determined that the video sharing function through the RCS service is not operating, the electronic device 101 may transmit the network resource change request to the application supporting the RCS service through the data controller (e.g., the data controller 220 of FIG. 2) in operation 511.

When it is determined that the video sharing function through the RCS service is operating, the electronic device 101 may identify whether a cell currently connected with the electronic device 101 is a cell supporting the first communication method through the data controller (e.g., the data controller 220 of FIG. 2) in operation 505. The first communication method may be a high speed packet access (HSPA) communication method.

When it is determined that the cell currently connected with the electronic device 101 is not a cell supporting the first communication method, the electronic device 101 may proceed from operation 505 to operation 511 through the data controller (e.g., the data controller 220 of FIG. 2).

When it is determined that the cell currently connected with the electronic device 101 is a cell supporting the first communication method, the electronic device 101 may identify whether a variance in transmission data transmitted from the application supporting the RCS service to the data controller (e.g., the data controller 220 of FIG. 2) is less than or equal to a specific variance determined by the data controller through the data controller (e.g., the data controller 220 of FIG. 2) in operation 507.

The specific variance in transmission data (TX data) determined by the data controller (e.g., the data controller 220 of FIG. 2) may be less than or equal to a variance transmission data determined by the network when a resource change request is made.

In various embodiments, when it is determined that the cell currently connected with the electronic device 101 is a cell supporting the first communication method, the electronic device 101 may determine whether a variance in transmission data of the electronic device 101 is less than or equal to the specific variance determined by the data controller by comparing 1) a variance in transmission data at a time when the network determines a resource change with 2) a variance in transmission data transmitted from an application area supporting the RCS service of the electronic device 101 to the data controller (e.g., the data controller 220 of FIG. 2) at a current time when the resource change request is received in operation 507.

When the variance in transmission data is less than or equal to the specific variance, the electronic device 101 may transmit dummy data to the network through the data controller (e.g., the data controller 220 of FIG. 2) in operation 409.

When the variance in transmission data is less than or equal to the specific variance, the electronic device 101 transmits dummy data to the network through the data controller (e.g., the data controller 220 of FIG. 2) in operation 409, thereby satisfying a data variance or transmission amount required by the network. Thus, the network does not request a resource change. Accordingly, a resource change does not occur while the video sharing function through the RCS service is operating, so that a call drop may not occur.

When the variance in transmission data is equal to or greater than the specific variance, the electronic device 101 may transmit the network resource change request to the application supporting the RCS service through the data controller (e.g., the data controller 220 of FIG. 2) in operation 511.

When the electronic device 101 does not transmit the network resource change request to the application supporting the RCS service, a resource change does not occur while the video sharing function through the RCS service is operating, so that a call drop may not occur.

The electronic device according to various embodiments may be one of various types of electronic devices. The electronic devices may include, for example, a portable communication device (e.g., a smart phone), a computer device, a portable multimedia device, a portable medical device, a camera, a wearable device, or a home appliance.

As used herein, such terms as "a first", "a second", "the first", and "the second" may be used to simply distinguish a corresponding element from another, and does not limit the elements in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via another element (e.g., third element).

As used herein, the term "module" may include a unit implemented in hardware, software, or firmware, and may be interchangeably used with other terms, for example, "logic," "logic block," "component," or "circuit". The "module" may be a minimum unit of a single integrated component adapted to perform one or more functions, or a part thereof. For example, the "module" may be implemented in the form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities. According to various embodiments, one or more of the above-described elements may be omitted, or one or more other elements may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

## Claims

1. A method for controlling video sharing through a rich communication suite, RCS, service by an electronic device, the method comprising:
receiving (401, 501) a resource change request from a network;
determining (403, 503) whether there is a video sharing operation through the RCS service upon receiving the request;
determining (405, 505) whether a cell connected with the electronic device is a cell supporting a high speed packet access, HSPA, communication method when there is the video sharing operation;
determining (407, 507) whether a transmission amount of data is equal to or greater than a predetermined transmission amount when it is determined that the cell connected with the electronic device is the cell supporting the HSPA communication method; and
transmitting (411, 511) the request to an application supporting the RCS service when the transmission amount of data is equal to or greater than the predetermined transmission amount.

2. The method as claimed in claim 1, comprising not transmitting (409) the request to the application supporting the RCS service when the transmission amount of data is less than or equal to the predetermined transmission amount.

3. The method as claimed in claim 1, comprising transmitting (509) dummy data to the network when the transmission amount of data is less than or equal to the predetermined transmission amount.

4. The method as claimed in claim 1, comprising transmitting (411, 511) the request to the application supporting the RCS service when there is no video sharing operation through the RCS service.

5. The method as claimed in claim 1, comprising transmitting (411, 511) the request to the application supporting the RCS service when it is determined that the cell connected with the electronic device is not the cell supporting the HPSA communication method.

6. The method as claimed in claim 1, wherein the determining (407, 507) whether the transmission amount of data is equal to or greater than the predetermined transmission amount further comprises:
determining whether an amount in data transmitted from the application supporting the RCS service to a processor corresponds to a predetermined transmission amount determined by the processor, and
the predetermined transmission amount **is** determined by the processor to be less than or equal to the transmission amount of data determined by the network when the resource change request is made.

7. The method as claimed in claim 1, wherein the determining (407, 507) whether the transmission amount of data is equal to or greater than the predetermined transmission amount further comprises comparing 1) an amount in transmission data at a time when the network determines a resource change with 2) an amount in transmission data transmitted from the application supporting the RCS service to a processor at a current time when the resource change request is received, and the predetermined transmission amount is determined by the processor to be less than or equal to the transmission amount of data determined by the network when the resource change request is made.

8. An electronic device for controlling video sharing through a rich communication suite, RCS, service, the electronic device comprising:
a display (160);
a communication module (190);
a processor (120); and
a memory (130) configured to be electrically connected to the processor (120),
wherein the memory (130) comprises instructions that cause the processor (120) to:
receive (401, 501) a resource change request from a network;
determine (403, 503) whether there is a video sharing operation through the RCS service upon receiving the request;
determine (405, 505) whether a cell connected with the electronic device is a cell supporting a high speed packet access, HSPA, communication method when there is the video sharing operation;
determine (407, 507) whether a transmission amount of data is equal to or greater than a predetermined transmission amount when it is determined that the cell connected with the electronic device is the cell supporting the HSPA communication method; and
transmit (411, 511) the request to an application supporting the RCS service when the data transmission amount of data is equal to or greater than the predetermined transmission amount.

9. The electronic device as claimed in claim 8, wherein the memory comprises instructions that cause the processor not to transmit (409) the resource change request from the network to the application supporting RCS service when the transmission amount of data | transmitted to the network is less than or equal to a predetermined transmission amount.

10. The electronic device as claimed in claim 8, wherein the memory comprises instructions that cause the processor to transmit (509) dummy data to the network through the communication module when the transmission amount of data transmitted to the network is equal to or greater than a predetermined transmission amount.

11. The electronic device as claimed in claim 8, wherein the memory comprises instructions that cause the processor not to transmit (411, 511) the resource change request from the network to the application supporting the RCS service when there is no video sharing operation through the RCS service.

12. The electronic device as claimed in claim 8, wherein the memory comprises instructions that cause the processor not to transmit the resource change request from the network to the application supporting the RCS service when it is determined that the cell connected with the communication module is not a cell supporting the HPSA communication method.

13. The electronic device as claimed in claim 8, wherein the memory comprises instructions that cause the processor to determine (407, 507) whether an amount in data transmitted from the application supporting the RCS service to the processor corresponds to the predetermined transmission amount determined by the processor, and the predetermined transmission amount is determined by the processor to be less than or equal to the transmission amount of data determined by the network when the resource change request is made.

14. The electronic device as claimed in claim 8, wherein the memory comprises instructions that cause the processor to compare 1) an amount in transmission data at a time when the network determines a resource change with 2) an amount in transmission data transmitted from an application area supporting the RCS service to a processor at a current time when the resource change request is received, and the predetermined transmission amount is determined by the processor to be less than or equal to the transmission amount of data determined by the network when the resource change request is made.

## Patentansprüche

1. Verfahren zur Steuerung der gemeinsamen Nutzung von Videos über einen reichhaltigen Kommunikations-, RCS,-Dienst durch eine elektronische Vorrichtung, wobei das Verfahren umfasst:
Empfangen (401, 501) einer Ressourcenänderungsanforderung von einem Netzwerk,
Bestimmen (403, 503), ob es eine Operation zur gemeinsamen Videonutzung durch den RCS-Dienst gibt, nachdem die Anforderung empfangen wurde;
Bestimmen (405, 505), ob eine mit der elektronischen Vorrichtung verbundene Zelle eine Zelle ist, die ein Hochgeschwindigkeits-Paketzugriffs-, HSPA,-Kommunikationsverfahren unterstützt, wenn es die Operation zur gemeinsamen Videonutzung gibt;
Bestimmen (407, 507), ob eine Übertragungsmenge von Daten gleich oder größer als eine vorbestimmte Übertragungsmenge ist, wenn bestimmt wird, dass die mit der elektronischen Vorrichtung verbundene Zelle die Zelle ist, die das HSPA-Kommunikationsverfahren unterstützt, und
Übertragen (411, 511) der Anforderung an eine Anwendung, die den RCS-Dienst unterstützt, wenn die Übertragungsmenge von Daten gleich oder größer ist als die vorbestimmte Übertragungsmenge.

2. Verfahren nach Anspruch 1, umfassend das Nicht-Übertragen (409) der Anforderung an die Anwendung, die den RCS-Dienst unterstützt, wenn die Übertragungsmenge von Daten kleiner als oder gleich der vorbestimmten Übertragungsmenge ist.

3. Verfahren nach Anspruch 1, umfassend das Übertragen (509) von Dummy-Daten an das Netzwerk, wenn die Übertragungsmenge von Daten kleiner oder gleich der vorbestimmten Übertragungsmenge ist.

4. Verfahren nach Anspruch 1, umfassend das Übertragen (411, 511) der Anforderung an die Anwendung, die den RCS-Dienst unterstützt, wenn es keine Operation zur gemeinsamen Videonutzung über den RCS-Dienst gibt.

5. Verfahren nach Anspruch 1, umfassend das Übertragen (411, 511) der Anforderung an die Anwendung, die den RCS-Dienst unterstützt, wenn bestimmt wird, dass die mit der elektronischen Vorrichtung verbundene Zelle nicht die Zelle ist, die das HPSA-Kommunikationsverfahren unterstützt.

6. Verfahren nach Anspruch 1, wobei das Bestimmen (407, 507), ob die Übertragungsmenge von Daten gleich oder größer als die vorbestimmte Übertragungsmenge ist, ferner umfasst:
Bestimmen, ob eine Datenmenge, die von der Anwendung, die den RCS-Dienst unterstützt, an einen Prozessor übertragen wird, einer vorbestimmten Übertragungsmenge entspricht, die von dem Prozessor bestimmt wird, und
die vorbestimmte Übertragungsmenge durch den Prozessor als kleiner oder gleich der Übertragungsmenge von Daten bestimmt wird, die durch das Netzwerk bestimmt wird, wenn die Ressourcenänderungsanforderung gemacht wird.

7. Verfahren nach Anspruch 1, wobei das Bestimmen (407, 507), ob die Übertragungsmenge von Daten gleich oder größer als die vorbestimmte Übertragungsmenge ist, ferner umfasst: Vergleichen 1) einer Menge an Übertragungsdaten zu einem Zeitpunkt, zu dem das Netzwerk eine Ressourcenänderung feststellt, mit 2) einer Menge an Übertragungsdaten, die von der Anwendung, die den RCS-Dienst unterstützt, zu einem Prozessor zu einem aktuellen Zeitpunkt übertragen werden, zu dem die Ressourcenänderungsanforderung empfangen wird, und
die vorbestimmte Übertragungsmenge durch den Prozessor als kleiner oder gleich der Übertragungsmenge von Daten bestimmt wird, die durch das Netzwerk bestimmt wird, wenn die Ressourcenänderungsanforderung gemacht wird.

8. Elektronische Vorrichtung zur Steuerung der gemeinsamen Nutzung von Videos durch einen reichhaltigen Kommunikations-, RCS,-Dienst, wobei die elektronische Vorrichtung umfasst:
eine Anzeige (160);
ein Kommunikationsmodul (190);
einen Prozessor (120); und
einen Speicher (130), der so konfiguriert ist, dass er elektrisch mit dem Prozessor (120) verbunden ist,
wobei der Speicher (130) Instruktionen enthält, die den Prozessor (120) veranlassen:
eine Ressourcenänderungsanforderung von einem Netzwerk zu empfangen (401, 501);
nach Empfangen der Anforderung zu bestimmen (403, 503), ob eine Operation zur gemeinsamen Videonutzung über den RCS-Dienst erfolgt;
zu bestimmen (405, 505), ob eine mit der elektronischen Vorrichtung verbundene Zelle eine Zelle ist, die ein Hochgeschwindigkeits-Paketzugriffs-, HSPA,-Kommunikationsverfahren unterstützt, wenn es die Operation zur gemeinsamen Videonutzung gibt;
zu bestimmen (407, 507), ob eine Übertragungsmenge von Daten gleich oder größer als eine vorbestimmte Übertragungsmenge ist, wenn bestimmt wird, dass die mit der elektronischen Vorrichtung verbundene Zelle die Zelle ist, die das HSPA-Kommunikationsverfahren unterstützt, und
die Anforderung an eine Anwendung zu übertragen (411, 511), die den RCS-Dienst unterstützt, wenn die Übertragungsmenge von Daten gleich oder größer ist als die vorbestimmte Übertragungsmenge.

9. Elektronische Vorrichtung nach Anspruch 8, wobei der Speicher Instruktionen umfasst, die den Prozessor veranlassen, die Ressourcenänderungsanforderung vom Netzwerk an die Anwendung, die den RCS-Dienst unterstützt, nicht zu übertragen (409), wenn die an das Netzwerk übertragene Übertragungsmenge von Daten kleiner oder gleich einer vorbestimmten Übertragungsmenge ist.

10. Elektronische Vorrichtung nach Anspruch 8, wobei der Speicher Instruktionen enthält, die den Prozessor veranlassen, Dummy-Daten über das Kommunikationsmodul an das Netzwerk zu übertragen (509), wenn die an das Netzwerk übertragene Übertragungsmenge von Daten gleich oder größer als eine vorbestimmte Übertragungsmenge ist.

11. Elektronische Vorrichtung nach Anspruch 8, wobei der Speicher Instruktionen umfasst, die den Prozessor veranlassen, die Ressourcenänderungsanforderung vom Netzwerk an die den RCS-Dienst unterstützende Anwendung nicht zu übertragen (411, 511), wenn es keine Operation zur gemeinsamen Videonutzung über den RCS-Dienst gibt.

12. Elektronische Vorrichtung nach Anspruch 8, wobei der Speicher Instruktionen umfasst, die den Prozessor veranlassen, die Ressourcenänderungsanforderung vom Netzwerk nicht an die Anwendung zu übertragen, die den RCS-Dienst unterstützt, wenn bestimmt wird, dass die mit dem Kommunikationsmodul verbundene Zelle keine Zelle ist, die das HPSA-Kommunikationsverfahren unterstützt.

13. Elektronische Vorrichtung nach Anspruch 8, wobei der Speicher Instruktionen umfasst, die den Prozessor veranlassen, zu bestimmen (407, 507), ob eine von der Anwendung, die den RCS-Dienst unterstützt, an den Prozessor übertragene Datenmenge der von dem Prozessor bestimmten vorbestimmten Übertragungsmenge entspricht, und
die vorbestimmte Übertragungsmenge durch den Prozessor als kleiner oder gleich der Übertragungsmenge von Daten bestimmt wird, die durch das Netzwerk bestimmt wird, wenn die Ressourcenänderungsanforderung gemacht wird.

14. Elektronische Vorrichtung nach Anspruch 8, wobei der Speicher Instruktionen enthält, die den Prozessor veranlassen, 1) eine Menge an Übertragungsdaten zu einem Zeitpunkt, zu dem das Netzwerk eine Ressourcenänderung feststellt, mit 2) einer Menge an Übertragungsdaten zu vergleichen, die von einem Anwendungsbereich, der den RCS-Dienst unterstützt, zu einem Prozessor zu einem aktuellen Zeitpunkt übertragen werden, zu dem die Ressourcenänderungsanforderung empfangen wird, und
die vorbestimmte Übertragungsmenge durch den Prozessor als kleiner oder gleich der Übertragungsmenge von Daten bestimmt wird, die durch das Netzwerk bestimmt wird, wenn die Ressourcenänderungsanforderung gemacht wird.

## Revendications

1. Procédé de commande de partage de vidéo par l'intermédiaire d'un service de suite de communication riche, RCS, par un dispositif électronique, le procédé comprenant :
recevoir (401, 501) une demande de changement de ressource en provenance d'un réseau ;
déterminer (403, 503) s'il existe une opération de partage de vidéo par l'intermédiaire du service RCS après réception de la demande ;
déterminer (405, 505) si une cellule connectée au dispositif électronique est une cellule prenant en charge un procédé de communication d'accès par paquets haut débit, HSPA, lors de l'opération de partage de vidéo ;
déterminer (407, 507) si une quantité de transmission de données est égale ou supérieure à une quantité de transmission prédéterminée lorsqu'il est déterminé que la cellule connectée au dispositif électronique est la cellule prenant en charge le procédé de communication HSPA ; et
transmettre (411, 511) la demande à une application prenant en charge le service RCS lorsque la quantité de transmission de données est égale ou supérieure à la quantité de transmission prédéterminée.

2. Procédé selon la revendication 1, comprenant la non transmission (409) de la demande à l'application prenant en charge le service RCS lorsque la quantité de transmission de données est inférieure ou égale à la quantité de transmission prédéterminée.

3. Procédé selon la revendication 1, comprenant la transmission (509) de données factices au réseau lorsque la quantité de transmission de données est inférieure ou égale à la quantité de transmission prédéterminée.

4. Procédé selon la revendication 1, comprenant la transmission (411, 511) de la demande à l'application prenant en charge le service RCS lorsqu'il n'y a pas d'opération de partage de vidéo par l'intermédiaire du service RCS.

5. Procédé selon la revendication 1, comprenant la transmission (411, 511) de la demande à l'application prenant en charge le service RCS lorsqu'il est déterminé que la cellule connectée au dispositif électronique n'est pas la cellule prenant en charge le procédé de communication HPSA.

6. Procédé selon la revendication 1, dans lequel le fait de déterminer (407, 507) si la quantité de transmission de données est égale ou supérieure à la quantité de transmission prédéterminée comprend en outre :
déterminer si une quantité de données transmise de l'application prenant en charge le service RCS à un processeur correspond à une quantité de transmission prédéterminée déterminée par le processeur, et
la quantité de transmission prédéterminée est déterminée par le processeur comme étant inférieure ou égale à la quantité de transmission de données déterminée par le réseau lorsque la demande de changement de ressource est faite.

7. Procédé selon la revendication 1, dans lequel le fait de déterminer (407, 507) si la quantité de transmission de données est égale ou supérieure à la quantité de transmission prédéterminée comprend en outre la comparaison 1) d'une quantité de données de transmission à un moment où le réseau détermine un changement de ressource avec 2) une quantité de données de transmission transmise de l'application prenant en charge le service RCS à un processeur à un moment donné lorsque la demande de changement de ressource est reçue, et
la quantité de transmission prédéterminée est déterminée par le processeur comme étant inférieure ou égale à la quantité de transmission de données déterminée par le réseau lorsque la demande de changement de ressource est faite.

8. Dispositif électronique permettant de commander le partage de vidéo par l'intermédiaire d'un service de suite de communication riche, RCS, le dispositif électronique comprenant :
un affichage (160) ;
un module de communication (190) ;
un processeur (120) ; et
une mémoire (130) configurée pour être connectée électriquement au processeur (120),
dans lequel la mémoire (130) comprend des instructions qui amènent le processeur (120) à :
recevoir (401, 501) une demande de changement de ressource en provenance d'un réseau ;
déterminer (403, 503) s'il existe une opération de partage de vidéo par l'intermédiaire du service RCS après réception de la demande ;
déterminer (405, 505) si une cellule connectée au dispositif électronique est une cellule prenant en charge un procédé de communication d'accès par paquets haut débit, HSPA, lors de l'opération de partage de vidéo ;
déterminer (407, 507) si une quantité de transmission de données est égale ou supérieure à une quantité de transmission prédéterminée lorsqu'il est déterminé que la cellule connectée au dispositif électronique est la cellule prenant en charge le procédé de communication HSPA ; et
transmettre (411, 511) la demande à une application prenant en charge le service RCS lorsque la quantité de transmission de données est égale ou supérieure à la quantité de transmission prédéterminée.

9. Dispositif électronique selon la revendication 8, dans lequel la mémoire comprend des instructions qui amènent le processeur à ne pas transmettre (409) la demande de changement de ressource depuis le réseau à l'application prenant en charge le service RCS lorsque la quantité de transmission de données transmise au réseau est inférieure ou égale à une quantité de transmission prédéterminée.

10. Dispositif électronique selon la revendication 8, dans lequel la mémoire comprend des instructions qui amènent le processeur à transmettre (509) des données factices au réseau par l'intermédiaire du module de communication lorsque la quantité de transmission de données transmise au réseau est égale ou supérieure à une quantité de transmission prédéterminée.

11. Dispositif électronique selon la revendication 8, dans lequel la mémoire comprend des instructions qui amènent le processeur à ne pas transmettre (411, 511) la demande de changement de ressource depuis le réseau à l'application prenant en charge le service RCS lorsqu'il n'y a pas d'opération de partage de vidéo par l'intermédiaire du service RCS.

12. Dispositif électronique selon la revendication 8, dans lequel la mémoire comprend des instructions qui amènent le processeur à ne pas transmettre la demande de changement de ressource depuis le réseau à l'application prenant en charge le service RCS lorsqu'il est déterminé que la cellule connectée au module de communication n'est pas une cellule prenant en charge le procédé de communication HPSA.

13. Dispositif électronique selon la revendication 8, dans lequel la mémoire comprend des instructions qui amènent le processeur à déterminer (407, 507) si une quantité de données transmise depuis l'application prenant en charge le service RCS au processeur correspond à la quantité de transmission prédéterminée déterminée par le processeur, et
la quantité de transmission prédéterminée est déterminée par le processeur comme étant inférieure ou égale à la quantité de transmission de données déterminée par le réseau lorsque la demande de changement de ressource est faite.

14. Dispositif électronique selon la revendication 8, dans lequel la mémoire comprend des instructions qui amènent le processeur à comparer 1) une quantité de données de transmission à un moment où le réseau détermine un changement de ressource avec 2) une quantité de données de transmission transmises d'une zone d'application prenant en charge le service RCS à un processeur à un moment donné lorsque la demande de changement de ressource est reçue, et
la quantité de transmission prédéterminée est déterminée par le processeur comme étant inférieure ou égale à la quantité de transmission de données déterminée par le réseau lorsque la demande de changement de ressource est faite.
